# EUROPEAN PATENT APPLICATION

(11) **EP 4 480 303 A1**
(43) Date of publication of application: **25.12.2024**
(21) Application number: 24182394.7
(22) Date of filing: 14.06.2024
(51) Int. Cl.: A01J 25/06, A01J 25/10, A01J 25/11

(54) **A HORIZONTAL CHEESE VAT, A METHOD FOR PROCESSING A CURD AND WHEY MIXTURE AND A CHEESE PRODUCTION LINE**

(30) Priority: 22.06.2023 EP 23180896
(71) Applicant: Tetra Laval Holdings & Finance S.A., 1009 Pully (CH)
(72) Inventor: Nijboer, Jan, 8448 GW Heerenveen (NL); Hoekstra, Harm, 8448 GW Heerenveen (NL); Eppinga, Ewoud, 8448 GW Heerenveen (NL)
(74) Representative: Tetra Pak - Patent Attorneys SE

(57) **Abstract**

A horizontal cheese vat (100) for processing a curd and whey mixture (C-W MIX) is presented. The vat (100) comprises
a main body (102) for holding the curd and whey mixture (C-W MIX),
a knives set (108) arranged on a horizontal shaft (106) extending along a center axis (C-A) of the main body (102),
an upper body (104) arranged above the main body (102),
a whey removal device (112) comprising a whey strainer (114) arranged to be placed into the curd and whey mixture (C-W MIX), and an arm (116) comprising a pipe connected to the whey strainer (114), wherein the arm (116) is rotatably attached to a fixed pipe arrangement (118) in the upper body (104) such that the whey strainer (114) in an idle position (IDLE) is placed in the upper body (102) and in a whey removal position (W-REM) is placed in the main body (102),
wherein the upper body (104) is provided with a first and a second outer side wall (124a,b), wherein at least one first and second brace (120a,b) are provided between an outside of the main body (102) and the first and second outer side wall (124a,b), respectively.

## Description

### Technical Field

The invention relates to cheese production. More particularly, it is related to a horizontal cheese vat for processing a curd and whey mixture, a method for processing the curd and whey mixture and a cheese production line.

### Background Art

Today it is well known to use a cheese vat for large-scale cheese production. Generally, the cheese vat is provided downstream milk processing equipment. In this way, the milk may be pasteurized, fat standardized etc before being fed into the cheese vat. Once provided in the cheese vat, a starter culture, specific strains of bacteria, is added to provide for that the milk can develop into a specific cheese type. Rennet is added to provide for that the milk coagulate into a curd and whey mixture. The curd and whey mixture is cut by using a knives set attached to a shaft provided in a center axis of the cheese vat. Once having the curd cut, the curd and whey mixture is heated, often indirectly by providing hot water into a jacket of the cheese vat, at the same time as this is stirred.

In some cheese vats the knives set are provided with knives having sharp edges facing in one direction and blunt edges facing in the opposite direction. In this way it is made possible to cut the curd and whey mixture by rotating the knives set in one direction, and stirring the curd and whey mixture by rotating in the opposite direction.

For removing whey from the curd and whey mixture it is known to use a whey removal device, sometimes referred to as a whey sieve. This may be provided in an upper body of the cheese vat such that this can be kept away from the knives set during cutting and stirring. During whey removal, the rotation of the knives set around the shaft can be halted and the whey removal device can be lowered into the curd and whey mixture such that whey can be absorbed into the whey removal device and removed from the curd and whey mixture in the vat. The removed whey may e.g. be transformed into whey powder.

The prior art successfully provide an efficient way to remove whey from the curd and whey mixture held inside the cheese vat. However, even though the current solutions are reliable and cost efficient, there is a need to further improve this process.

### Summary

It is an object of the invention to at least partly overcome one or more of the above-identified limitations of the prior art. In particular, it is an object to provide a cheese vat with improved cleanability, that is, a cheese vat that can be cleaned in less time and/or by using less water and/or cleaning agents. A further object is to provide a cheese vat providing increased versatility.

Generally, it has been realized that by having external braces instead of internal braces, that is, having the braces for making the cheese vat capable of withstanding mechanical and thermal stress placed on an outside of the cheese vat instead of on an inside, an improved cheese vat is achieved. The cheese vat is improved in that by having the braces placed on the outside, a more smooth inside of the vat is achieved. Put differently, by having an interior of the vat void of braces, there is fewer corner areas inside the vat, which improves cleanability. Second, by having the interior of the vat without any braces, more room is provided for a whey strainer inside the vat. By being able to have a longer whey strainer, compared to what is possible in a vat with internal braces, whey can be removed from the vat at a higher speed. Put differently, using the external braces comes with the benefit that the whey strainer in the vat can have a higher capacity compared to the whey strainer of the vat with internal braces. By being able to remove the whey at a higher speed improves a versatility of the cheese vat, making it possible to process the curd and whey mixture in ways not possible when using the vat with internal braces.

According to a first aspect it is provided a horizontal cheese vat for processing a curd and whey mixture, said vat comprising
a main body for holding the curd and whey mixture,
a knives set arranged on a horizontal shaft extending along a center axis of the main body,
an upper body arranged above the main body,
a whey removal device comprising a whey strainer arranged to be placed into the curd and whey mixture, and an arm comprising a pipe connected to the whey strainer, wherein the arm is rotatably attached to a fixed pipe arrangement in the upper body such that the whey strainer in an idle position is placed in the upper body and in a whey removal position is placed in the main body,
wherein the upper body is provided with a first and a second outer side wall, wherein at least one first and second brace are provided between an outside of the main body and the first and second outer side wall, respectively.

As described above, by having the braces provided on the outside of the vat, the cleanability as well as versatility of the vat can be improved.

The term horizontal cheese vat should be read in the sense that it is a cheese vat that is of a horizontal type, i.e. e.g. not a vertical cheese vat. The word horizontal is thus used to indicate the general direction and type of equipment. In some embodiments the horizontal cheese vat is arranged with a slight angle of 0-10 degrees, preferably 1-4 degrees, to the strict horizontal plane to facilitate draining of the horizontal cheese vat while the horizontal cheese vat is still arranged substantially horizontal.

A top of the upper body may be dome-shaped.

By having the top dome-shaped and by having the braces attached to the first and second outer side walls, it is possible to withstand mechanical stress and thermal stress efficiently.

The first and second outer side walls of the upper body may be inclined towards the main body such that first and second indents are formed between the upper body and the main body, wherein the at least one first and second braces are placed in the first and second indents, respectively.

By providing the indents and having the braces placed in these, it is made possible to provide a vat that can withstand the mechanical stress and thermal stress and at the same time the main body and the upper body can be void of braces.

The main body may be provided with a cylindrical portion, a first flat portion arranged above the cylindrical portion and attached to the first outer side wall of the upper body, and a second flat portion arranged above the cylindrical portion and attached to the second side wall of the upper body, wherein the first and second indents may be formed by the first flat portion and the first outer side wall, and by the second flat portion and the second outer side wall, respectively.

By having the flat portions, it is made easier to mount braces onto the vat.

An angle between a normal vector of the first flat portion and a normal vector of the first outer side wall as well as an angle between a normal vector of the second flat portion and a normal vector of the second outer side wall may be 15 to 50 degrees.

By having the angles in this interval, the cheese vat can withstand the stresses efficiently at the same time as the interior is arranged such that cleaning can be made efficiently.

The whey strainer may extend in a direction substantially parallel to the center axis of the main body, wherein a length of the whey strainer is at least 50% of a length of a cylindrical portion of the main body, preferably at least 75% of the length.

An advantage with having the whey strainer extending over 50% or more of the length of the cylindrical portion of the main body is that the capacity of the whey removal device can be increased, thereby providing for the possibility to produce cheese types requiring the whey to be removed quickly.

An interior of the main body and the upper body may be void of braces.

By completely removing braces from the interior of the vat, that is, no internal braces, cleanability can be improved.

The whey strainer may extend over a mid-point of the main body.

As described above, by having the whey strainer extending over a large part of the length of the vat, such as 50% or more, the whey removal capacity can be improved.

The main body may be provided at least partly with a jacket such that the curd and whey mixture held in the main body can indirectly be heated by hot water in the jacket or cooled by cold water in the jacket.

Having the jacket in combination with the whey strainer with improved whey removal capacity, as described above, provides for increased versatility, making it possible to produce cheese types not possible, or at least difficult, to produce with existing cheese vats with internal braces and whey strainer with capacity limited by restrictions caused by the internal braces.

The at least one first and second braces may each comprise a doubling plate in turn comprising a first portion configured for attachment to the first or second outer side wall of the upper body and a second portion configured for attachment to the outside of the main body, and a load bearing member attached to the first and second portion of the doubling plate.

The load bearing member may comprise a plate perpendicularly arranged with respect to the first and second portion.

According to a second aspect it is provided a method for processing a curd and whey mixture by using a horizontal cheese vat according to the first aspect, said method comprising
feeding milk into the main body of the horizontal cheese vat,
feeding rennet into the main body,
cutting the curd and whey mixture formed from the milk and rennet by using the knives set provided in the main body,
stirring the curd and whey mixture,
removing whey from the curd and whey mixture by parking the knives set and moving down the whey strainer of the whey removal device arranged, during cutting and stirring, in the upper body of the horizontal cheese vat, into the curd and whey mixture held in the main body.

The same features and advantages as described above with respect to the first aspect also apply to this second aspect.

The method may further comprise
heating the curd and whey mixture via a heat transfer medium provided in a jacket provided on at least part of the main body.

A length L1 of the whey strainer may be at least 50% of a length of a cylindrical portion of the main body, preferably at least 75% of the length, wherein the removing of the whey may be performed by using the whey strainer extending along at least 50% of the length.

According to a third aspect it is provided a cheese production line comprising milk treatment equipment, such as a heat treatment apparatus, a horizontal cheese vat according to the first aspect, draining and pressing equipment for removing additional whey from the curd and whey mixture and for forming curd blocks, and brining equipment for bringing the curd blocks.

Still other objectives, features, aspects and advantages of the invention will appear from the following detailed description as well as from the drawings.

### Brief Description of the Drawings

Embodiments of the invention will now be described, by way of example, with reference to the accompanying schematic drawings, in which
Fig. 1 is a perspective view of a cheese vat provided with external braces as well as a cheese vat provided with internal braces.
Fig. 2 is a cross-sectional view of the cheese vat provided with external braces.
Fig. 3A is a cross-sectional view of the cheese vat with external braces with a whey removal device in an idle state.
Fig. 3B is a cross-sectional view of the cheese vat with the whey removal device in a whey removal state.
Fig. 4 illustrates a cross-sectional view of the cheese vat as well as a side view of the same.
Fig. 5A illustrates a side view of a brace in further detail.
Fig. 5B illustrates a front view of the brace.
Fig. 6 is a flow chart illustrating a method for processing a curd and whey mixture.
Fig. 7 schematically illustrates a cheese production line.

### Detailed Description

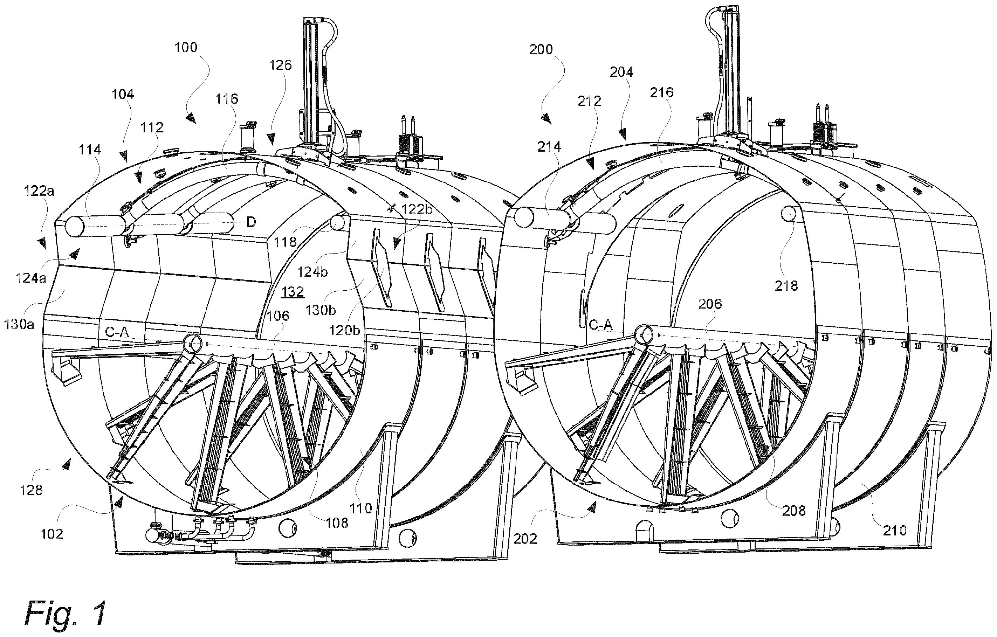

Fig. 1 illustrates two horizontal cheese vats 100, 200 by way of example. The cheese vat 100 placed to the left in fig. 1 is provided with external braces while the cheese vat 200 placed to the right is provided with internal braces. The cheese vat 100 with the external braces provides for improved cleanability compared to the cheese vat 200 with internal braces, which constitute prior art. One reason for the improved cleanability is that there are fewer corner areas inside the cheese vat 100 with external braces compared to the cheese vat 200 with internal braces. Another advantage with the external braces is that a whey removal device 112 is not hindered by the internal braces, which as an effect provides for that the whey removal device 112 can have a higher capacity compared to a whey removal device 212 of the cheese vat 200 with internal braces. Having increased capacity of the whey removal device 212 comes with the positive effect that a versatility of the cheese vat 200 can be improved. Cheese production is namely depending on several parameters and by being able to remove the whey at an increased speed, there is increased opportunities made available for the cheese production.

Starting with the cheese vat 100 provided with the external braces, this vat 100 comprises a main body 102 and an upper body 104. As illustrated, the main body 102 and the upper body 104 are internally connected to one another such that a closed environment for a curd and whey mixture C-W MIX is formed. The main body 102 can comprise a shaft 106 to which a knives set 108 is attached. The knives set 108 may comprise frames with blades as illustrated. The blades may have one sharp edge and one blunt edge, being placed opposite to the sharp edge, such that the curd and whey mixture C-X MIX can be cut by rotating the shaft 106 in one direction and stirring the curd and whey mixture C-W MIX by rotating the shaft 106 in an opposite direction. The main body 102 can be provided with a jacket 110. This may be a so-called dimpled jacket. By feeding in hot water into the jacket 100, or any other heat transfer medium, the curd and whey mixture C-W MIX held in the main body 102 may be indirectly heated. In a similar manner, cold water may be introduced into the jacket 110 such that the curd and whey mixture C-W MIX is cooled.

In the upper body 104, the whey removal device 112 can be placed. This can comprise a whey strainer 114, that is, a sieve-like device provided with openings that, when lowered into the curd and whey mixture C-W MIX, can provide for that whey W is absorbed from the mixture. As illustrated, the whey strainer 114 can be connected to an arm 116 comprising a pipe for transporting the whey W. The arm 116 can in turn be rotatably connected to a fixed pipe arrangement 118. In this way, it is made possible to have the whey strainer 114 and also part of the arm 116 lowered into the main body 102 once the whey W is to be removed. During e.g. cutting and stirring, the whey strainer 114 can be held, as illustrated, in the upper body 104 such that the knives set 108 can be rotated without interfering with the whey removal device 112.

As explained above, to be able to increase whey removal capacity and also improve cleanability, first and second braces 120a,b are provided externally. To assure that mechanical as well as thermal stress can be handled efficiently, it has been found that first and second indents 122a,b can be provided in transition areas between the main body 102 and the upper body 104. In addition, a top 126 of the upper body 104 can be dome-shaped, as illustrated.

The first and second indents 122a,b can be formed by having a first and second outer side walls 124a,b of the upper body 104 inclined towards a center of the cheese vat 100. Further, first and second flat portions 130a,b can be provided on the main body 102. By having these flat portions 130a,b and also having flat outer side walls 124a,b of the upper body 104, the braces 120a,b can easily be mounted on the cheese vat 100.

A positive effect of having the braces 120a,b placed outside the cheese vat 100, or put differently using external braces, is that an interior 132 of the cheese vat 100 can be void of braces. By not having internal braces, there is no risk of having milk residues in corner areas formed between the internal braces and an inside of the cheese vat 100. As an effect, less time, less water and less cleaning agents is needed for cleaning the vat 100.

Still a positive effect of having the external braces, instead of the internal braces, is that there is more room made available for the whey strainer 114. As illustrated, the whey strainer 114 may extend in a direction D which may be substantially parallel with a center axis C-A of the vat 100. As illustrated, in the cheese vat 200 provided with the internal braces, a whey strainer 212 can be provided, but due to the internal braces, a length of the whey strainer is limited by distances between the internal braces. Since the length of the whey strainer 114, 214 corresponds to the capacity with which whey W can be removed, having the braces 120a,b placed on the outside of the cheese vat 100 provides for that the whey removal capacity can be improved. Since producing cheese is dependent on a number of different parameters, the increased whey removal capacity has a direct impact on which types of cheeses that can be produced in the cheese vat 100. In other words, by having the braces 120a,b placed on the outside of the vat 100, the versatility is improved.

Referring to the cheese vat 200 to the right in fig. 1, this vat 200 comprises a main body 202 and an upper body 204. However, unlike the cheese vat 100 with the external braces, the braces are placed internally, that is, inside the vat 200. There is also no indents, but substantially flat, vertical side walls between the main body 202 and the upper body 204. As for the cheese vat 100 with the external braces, a shaft 206 with a knives set 208 attached thereto is provided. It is also provided a jacket 210 for providing indirect heating and cooling of the curd and whey mixture C-W MIX. However, since the whey removal device 112 of the vat 100 with external braces can provide a higher whey removal capacity, the jacket 110 of the vat 100 may be arranged such that the heating and cooling is aligned with the whey removal. Put differently, the jacket 110 of the cheese vat 100 with external braces may be arranged to more quickly heat or cool the curd and whey mixture C-W MIX compared to the jacket 210 of the vat 200 with internal braces. This may e.g. be achieved by having additional inlets and outlets in the jacket 110 of the vat 100 with external braces.

Further, the whey removal device 212 can in line with the whey removal device 112 of the vat 100 with external braces comprise a whey strainer 214, an arm 216 and a fixed pipe arrangement 218. However, as described above, the whey strainer 214 is shorter than the whey strainer 114 of the vat 100 with external braces.

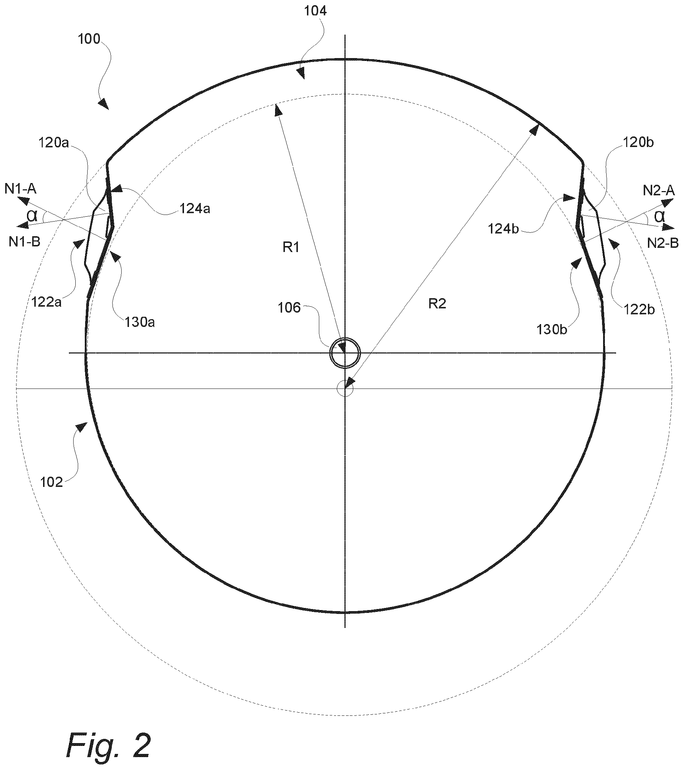

Fig. 2 illustrates a cross-sectional view of the cheese vat 100 with external braces by way of example. As illustrated, the main body 102 may be cylindrically shaped and have a first radius R1. As illustrated, the center axis C-A may be aligned with the shaft 106. The knives set 108, even though not illustrated in fig. 2, may have a length that is substantially equal to the first radius R1, more particularly slightly less than the first radius R1, such that the curd and whey mixture C-W MIX can be cut and stirred efficiently.

As illustrated, the upper body 104 may be dome-shaped and have a second radius R2, wherein the second radius R2 is greater than the first radius R1.

As described above, the first indent 122a may be formed by the first outer side wall 120a of the upper body 104 and the first flat portion 130a of the main body 102, and the second indent 122b may be formed by the second outer side wall 120b of the upper body 104 and the second flat portion 130b of the main body 102. An angle α between a normal vector N-1A of the first flat portion 130a and a normal vector N-1B of the first outer side wall 124a may be 15 to 50 degrees. This may also hold true for the angle α between a normal vector N-2A of the second flat portion 130b and a normal vector N-2B of the second outer side wall 124b.

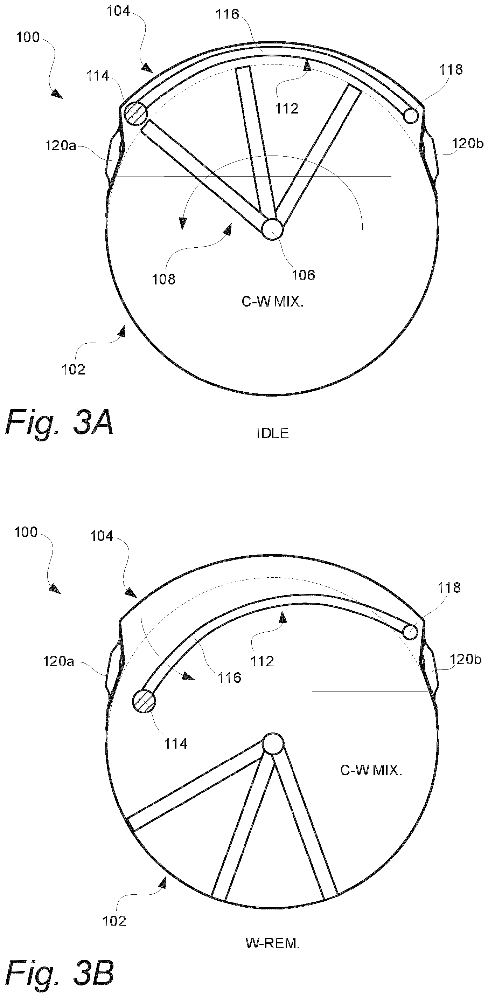

Fig. 3A illustrates a cross-sectional view of the cheese vat 100 with the whey removal device 112 in an idle state IDLE, that is, the whey strainer 114 placed in the upper body 104. With the whey removal device 112 placed in the idle state, the knives set 108 can be rotated around the shaft 106 without interfering with the whey removal device 112.

Once the curd and whey mixture C-W MIX has been cut and stirred, the whey removal device 112 may be moved into the curd and whey mixture C-W MIX, that is, the whey removal device 112 may move from the idle state IDLE, illustrated in fig. 3A, to a whey removal state W-REM illustrated in fig. 3B. As illustrated in fig. 3B, the whey strainer 114 may be moved into the curd and whey mixture C-W MIX by rotating the whey removal device 112 around the fixed pipe arrangement 118.

As described above, an advantage of having the interior 132 of the cheese vat 100 void of braces is that the whey strainer 114 is not restricted by internal braces, which comes with the advantage that the capacity of the whey removal device 112 can be increased.

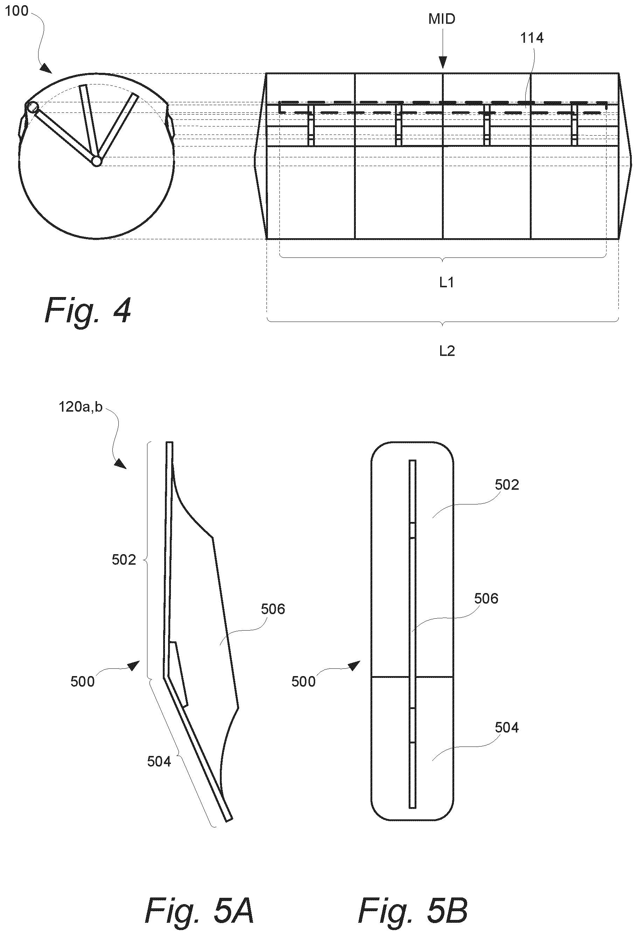

As illustrated in fig. 4, a length L1 of the whey strainer 114 may be at least 50% of a length L2 of the cylindrical portion 128 of the main body 102, preferably at least 75% of the length L2. Further, the whey strainer 114 may also extend over a mid-point MID of the main body 102, or more particularly the cylindrical portion 128 of the main body 102.

In the example, four braces on either side of the cheese vat 100 are provided. This may an adequate choice for a vat holding about 30 000 liters. For a vat holding 25 000 liters, three braces on either side of the vat may be sufficient.

Fig. 5A illustrates the first and second brace 120a,b in further detail and by way of example. In this particular example, the brace 120a,b comprises a doubling plate 500 in turn comprising a first portion 502 configured for attachment to the first or second outer side wall 124a,b of the upper body 104 and a second portion 504 configured for attachment to the outside of the main body 102. Further, a load bearing member 506 can be attached to the first and second portion 502, 504 of the doubling plate 500 such that mechanical as well as thermal stress can be handled. As illustrated, the load bearing member 506 may comprise a plate perpendicularly arranged with respect to the first and second portion 502, 504.

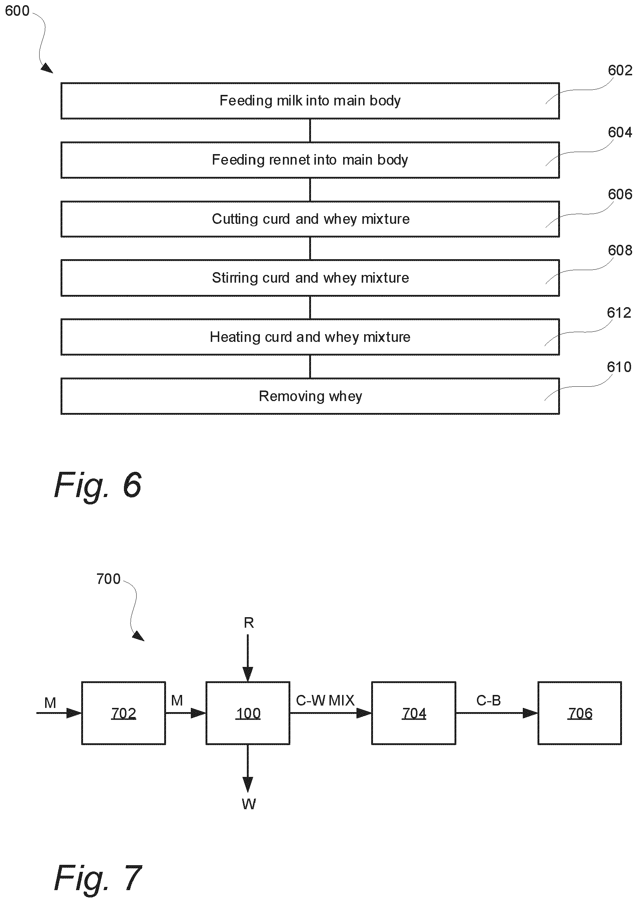

Fig. 6 is a flowchart illustrating a method 600 for processing the curd and whey mixture C-W MIX by using the cheese vat 100. The method can comprise feeding 602 milk M into the main body 102 of the cheese vat 100, feeding 604 rennet R into the main body 102, cutting 606 the curd and whey mixture C-W MIX formed from the milk and rennet by using the knives set 108 provided in the main body 102, stirring 608 the curd and whey mixture C-W MIX, removing 610 whey W from the curd and whey mixture C-W MIX by parking the knives set 108 and moving down the whey strainer 114 of the whey removal device 112 arranged, during cutting 606 and stirring 608 in the upper body 104 of the horizontal cheese vat 100, into the curd and whey mixture C-W MIX held in the main body 102. In addition, the method 600 may also comprise heating 612 the curd and whey mixture C-W MIX via a heat transfer medium provided in the jacket 110 provided on at least part of the main body 102.

Fig. 7 illustrates schematically a cheese production line 700. This may comprise milk treatment equipment 702, such as a heat treatment apparatus, the cheese vat 100 described above, draining and pressing equipment 704 for removing additional whey W from the curd and whey mixture C-W MIX and for forming curd blocks C-B, and brining equipment 706 for brining the curd blocks C-B.

From the description above follows that, although various embodiments of the invention have been described and shown, the invention is not restricted thereto, but may also be embodied in other ways within the scope of the subject-matter defined in the following claims.

## Claims

1. A horizontal cheese vat (100) for processing a curd and whey mixture (C-W MIX), said vat (100) comprising
a main body (102) for holding the curd and whey mixture (C-W MIX),
a knives set (108) arranged on a horizontal shaft (106) extending along a center axis (C-A) of the main body (102),
an upper body (104) arranged above the main body (102),
a whey removal device (112) comprising a whey strainer (114) arranged to be placed into the curd and whey mixture (C-W MIX), and an arm (116) comprising a pipe connected to the whey strainer (114), wherein the arm (116) is rotatably attached to a fixed pipe arrangement (118) in the upper body (104) such that the whey strainer (114) in an idle position (IDLE) is placed in the upper body (102) and in a whey removal position (W-REM) is placed in the main body (102),
wherein the upper body (104) is provided with a first and a second outer side wall (124a,b), wherein at least one first and second brace (120a,b) are provided between an outside of the main body (102) and the first and second outer side wall (124a,b), respectively.

2. The horizontal cheese vat (100) according to claim 1, wherein a top (126) of the upper body (104) is dome-shaped.

3. The horizontal cheese vat (100) according to any one of the preceding claims, wherein the first and second outer side walls (124a,b) of the upper body (104) are inclined towards the main body (102) such that first and second indents (122a,b) are formed between the upper body (104) and the main body (102), wherein the at least one first and second braces (102a,b) are placed in the first and second indents (122a,b), respectively.

4. The horizontal cheese vat (100) according to claim 3, wherein the main body (102) is provided with a cylindrical portion (128), a first flat portion (130a) arranged above the cylindrical portion (128) and attached to the first outer side wall (124a) of the upper body (104), and a second flat portion (130b) arranged above the cylindrical portion (128) and attached to the second side wall (124b) of the upper body (104), wherein the first and second indents (122a,b) are formed by the first flat portion (130a) and the first outer side wall (124a), and by the second flat portion (130b) and the second outer side wall (124b), respectively.

5. The horizontal cheese vat (100) according to claim 4, wherein an angle (α) between a normal vector (N-1A) of the first flat portion (130a) and a normal vector (N-1B) of the first outer side wall (124a) as well as an angle (α) between a normal vector (N-2A) of the second flat portion (130b) and a normal vector (N-2B) of the second outer side wall (124b) are 15 to 50 degrees.

6. The horizontal cheese vat (100) according to any one of the preceding claims, wherein the whey strainer (114) extends in a direction (D) substantially parallel to the center axis (C-A) of the main body (102), wherein a length (L1) of the whey strainer (114) is at least 50% of a length (L2) of a cylindrical portion of the main body (102), preferably at least 75% of the length (L2).

7. The horizontal cheese vat (100) according to any one of the preceding claims, wherein an interior (132) of the main body (102) and the upper body (204) is void of braces.

8. The horizontal cheese vat (100) according to any one of the preceding claims, wherein the whey strainer (114) extends over a mid-point (MID) of the main body (102).

9. The horizontal cheese vat (100) according to any one of the preceding claims, wherein the main body (102) is provided at least partly with a jacket (110) such that the curd and whey mixture (C-W MIX) held in the main body (102) can indirectly be heated by hot water in the jacket (110) or cooled by cold water in the jacket (110).

10. The horizontal cheese vat (100) according to any one of the preceding claims, wherein the at least one first and second braces (120a,b) each comprises
a doubling plate (500) in turn comprising a first portion (502) configured for attachment to the first or second outer side wall (124a,b) of the upper body (104) and a second portion (504) configured for attachment to the outside of the main body (102), and
a load bearing member (506) attached to the first and second portion (502, 504) of the doubling plate (500).

11. The horizontal cheese vat (100) according to claim 10, wherein the load bearing member (506) comprises a plate perpendicularly arranged with respect to the first and second portion (502, 504).

12. A method (600) for processing a curd and whey mixture (C-W MIX) by using a horizontal cheese vat (100) according to any one of claim 1 to 11, said method comprising
feeding (602) milk (M) into the main body (102) of the horizontal cheese vat (100),
feeding (604) rennet (R) into the main body (102),
cutting (606) the curd and whey mixture (C-W MIX) formed from the milk and rennet by using the knives set (108) provided in the main body (102),
stirring (608) the curd and whey mixture (C-W MIX), and
removing (610) whey (W) from the curd and whey mixture (C-W MIX) by parking the knives set (108) and moving down the whey strainer (114) of the whey removal device (112) arranged, during cutting (606) and stirring (608) in the upper body (104) of the horizontal cheese vat (100), into the curd and whey mixture (C-W MIX) held in the main body (102).

13. The method (600) according to claim 12, the method further comprising heating (612) the curd and whey mixture (C-W MIX) via a heat transfer medium provided in a jacket (110) provided on at least part of the main body (102).

14. The method (600) according to claim 12 or 13, wherein a length (L1) of the whey strainer (114) is at least 50% of a length (L2) of a cylindrical portion of the main body (102), preferably at least 75% of the length (L2),
wherein the removing (610) of the whey (W) is performed by using the whey strainer (114) extending along at least 50% of the length (L2).

15. A cheese production line (700) comprising
milk treatment equipment (702), such as a heat treatment apparatus,
a horizontal cheese vat (100) according to any one of the claim 1 to 11,
draining and pressing equipment (704) for removing additional whey (W) from the curd and whey mixture (C-W MIX) and for forming curd blocks (C-B), and
brining equipment (706) for brining the curd blocks (C-B).
